# EUROPÄISCHE PATENTSCHRIFT

(11) **EP 0 825 705 B1**
(45) Veröffentlichungstag und Bekanntmachung des Hinweises auf die Patenterteilung: **09.05.2001**
(21) Anmeldenummer: 97111616.5
(22) Anmeldetag: 09.07.1997
(51) Int. Cl.: H02K 53/00, H02K 57/00

(54) **Elektromechanische Kraftmaschine**
Electromechanical power machine
Machine motrice électromécanique

(30) Priorität: 16.08.1996 DE 19632897; 22.05.1997 DE 19721434
(43) Veröffentlichungstag der Anmeldung: 25.02.1998
(73) Patentinhaber: Brzoska, Franz-Josef, 69502 Hemsbach (DE)
(72) Erfinder: Brzoska, Franz-Josef, 69502 Hemsbach (DE)

(56) Entgegenhaltungen:
- FR-A- 2 466 130
- GB-A- 2 248 525

## Beschreibung

Die Erfindung betrifft eine elektromechanische Kraftmaschine.

Eine Wippe aufweisende elektromagnetische Antriebsvorrichtung ist aus der FR-PS 548 445 bekannt.

Aufgabe der Erfindung ist es, mit der grundlegenden Neukonzeption der elektromechanischen Kraftmaschine einen hohen Wirkungsgrad zu erzielen.

Die Erfindung ist um Anspruch 1 definiert.

Die elektromechanische Kraftmaschine wird als Ausführungsbeispiel mit sechs Kraft-Erzeuger-Einheiten anhand von Fig.1 bis 5 und der Tabelle 1 beschrieben und näher erläutert.
Diese Unterlagen zeigen bzw. beinhalten:
Fig.1 eine Teilansicht einer erfindungsgemäßen elektromechanischen Kraftmaschine, dargestellt im Schnitt A - B.
Fig.2 einen Querschnitt von Fig.1, dargestellt im Schnitt E - F, mit der Anordnung der Kraft-Erzeuger-Einheiten (KEE) I bis VI am Maschinengestell, und der Veranschaulichung der Auslösung des Arbeitstaktes 1 kurz vor dem unteren Totpunkt.
Fig.3 einen Querschnitt von Fig.1, dargestellt im Schnitt C - D, und der Veranschaulichung der Krafteinleitung in die Kurbelwelle.
Fig.4 eine Darstellung der Magnetanzugskraft-Modifizierunsphase im Kraft-Luftweg-Diagramm.
Fig.5 eine Prinzipskizze des Kurbelzapfen 22.1 auf seiner Umlaufbahn während des Arbeitstaktes 1 der KEE I, die Auswirkung des Hubweges s_{H}' auf den Bewegungswinkel dieses Kurbelzapfens mit Bezug auf die Winkelteilung am Maschinengestell, und der Darstellung des daraus resultierenden Anteils an einer Kurbelwellenumdrehung. Tab.1 eine Zuordnung der Bewegungswinkel der Kurbelzapfen 22.1 und 22.2 in Verbindung mit den Arbeitstakten 1 und 2 zu den Kraft-Erzeuger-Einheiten I bis VI.

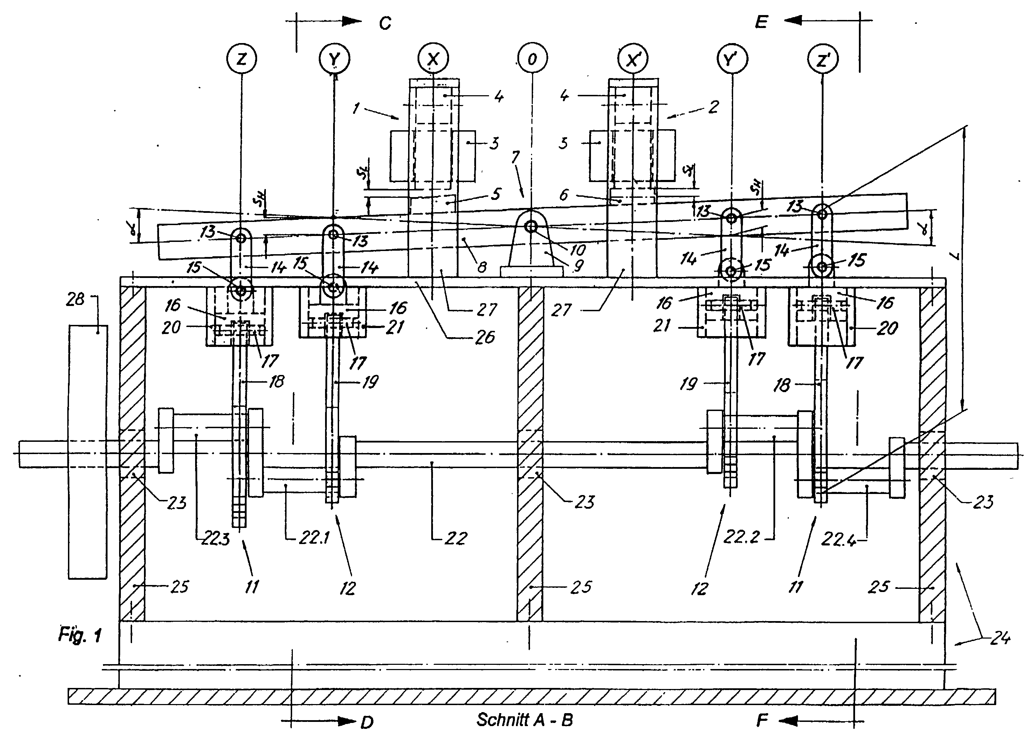

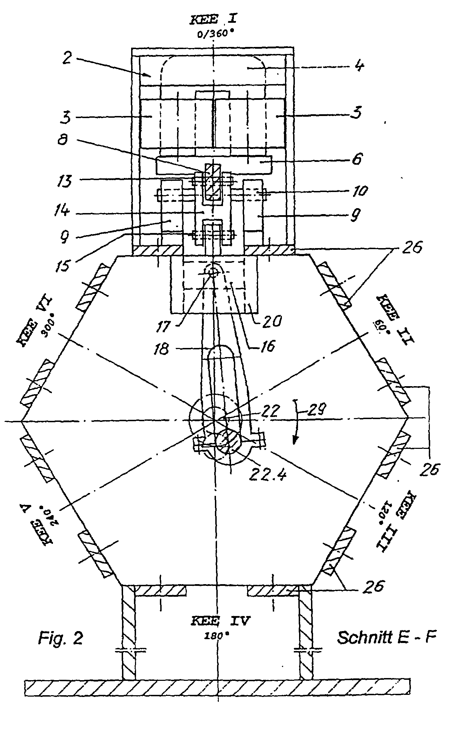

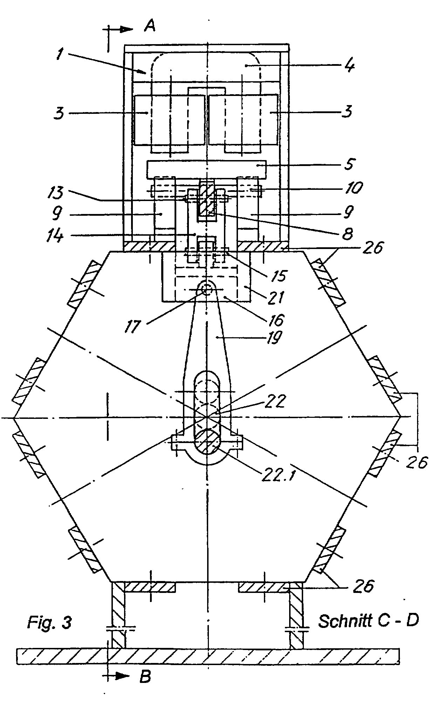

Die elektromechanische Kraftmaschine in der Ausführungsform mit den Kraft-Erzeuger-Einheiten I bis VI ist in den Fig.1 bis Fig.3 dargestellt, mit der Ausnahme jedoch, daß in Fig.1 nur die Kraft-Erzeuger-Einheit I wegen der grundsätzlichen Gleichheit mit den anderen Einheiten zeichnerisch wiedergegeben ist.
Die Anordnung der Kraft-Erzeuger-Einheiten I bis VI am Maschinengestell ist aus Fig.2 ersichtlich, in welcher die Kraft-Erzeuger-Einheiten, über ihren vom Mittelpunkt strahlenförmig ausgehenden Mittellinien, mit den Kürzeln KEE I bis KEE VI versehen sind. Die in der KEE I angewendete Kennzeichnung der Teile sowie alle anderen Bezugszeichen gelten daher auch für die KEE II bis VI.

Bei der elektromechanischen Kraftmaschine sind die KEE I bis VI an dem Maschinengestell 24 symmetrisch verteilt angeordnet, wobei die Ständer 25 die Form eines Sechskant haben und mit den Flachprofilträgern 26 untereinander fest verbunden sind.

Die Elektromagnete 1, 2 jeder KEE sind auf ihren jeweiligen Achsen X,X' angeordnet und mit den Halterungen 27 an den Flachprofilträgern 26 befestigt, wobei die Eisenkerne 4 mit den Halterungen 27 verbunden sind.
Die Elektromagnete 1, 2 sind durch die Bauart der Eisenkerne 4 in Hufeisenform mit Vierkantprofil, und damit durch die zwei Magnetpole sowie den vierkantigen Polflächen, mit einer für diese Bauart größt erreichbaren Gesamtanzugsfläche versehen.
Die Eisenkerne 4 und die Ankerplatten 5, 6 bestehen aus einem weichmagnetischen Werkstoff, den eine hohe magnetische Flußdichte bei stromdurchflossener Spule und eine verbleibende Flußdichte bei stromloser Spule (Remanenz) kennzeichnet, und die Remanenz ist so vorbestimmt, daß diese bei der Modifizierung der Magnetanzugskräfte benutzt werden kann. Die Elektromagnete 1, 2 sind mit Spulen 3 versehen, die eine so große Anzahl an Windungen aufweisen, daß einerseits die antreibende Größe im magnetischen Kreis die Durchflutung, Θ = I · N, also das Produkt aus Stromstärke (I) mal der Anzahl der Spulenwindungen (N), primär aus der Anzahl der Spulenwindungen gewonnen wird, und daß andererseits der aus der Anzahl der Spulenwindungen resultierende Drahtwiderstand zur Minimierung der Stromaufnahme und damit zur Aufnahmebegrenzung der elektrischen Leistung angewendet wird, wobei die Spulen 3 an eine elektrische Gleichspannung angeschlossen sind, bei welcher die Stromaufnahme nur vom Drahtwiderstand, nicht aber von der Induktivität der Spule(n) bzw. der Größe des Luftweges s_{L} abhängig ist.

Die Wippe 7 jeder KEE ist auf ihrer jeweiligen Achse 0 am Maschinengestell 24 angeordnet und mittels der Stehlager 9 an den Flachprofilträgern 26 befestigt, wobei die Welle als Drehpunkt 10 drehfest mit dem Balken 8 verbunden und in den Stehlagern 9 beweglich angebracht ist. Die an den Balken 8 befestigten Ankerplatten 5, 6 und die Elektromagnete 1, 2 sind zur Balkenlängsachse quer angeordnet, wobei die Form der Ankerplatten 5, 6 den geometrischen Gegebenheiten, die zwischen dem Balken 8 und den Magnetpolen bestehen, angepaßt ist, und mit welcher ein sattes Anliegen dieser Platten an die Magnetpole erreicht wird. Der Baken 8 ist mit Bohrungen versehen, die für die Steuergestänge 11 auf den senkrechten Achsen Z,Z' und für die Zuggestänge 12 auf den senkrechten Achsen Y,Y' angeordnet sind, wobei der Abstand, welcher zwischen der senkrechten Achse 0 und den senkrechten Achsen Z,Z', und auch der Abstand, welcher zwischen der senkrechten Achse 0 und den senkrechten Achsen Y,Y' liegt, von KEE zur KEE unterschiedlicher Länge ist, und was bei der KEE I bis VI zur Folge hat, daß die Hubwege s_{H} von geringfügig unterschiedlichen Längen sind.

Die Steuergestänge 11 und die Zuggestänge 12 sind mittels der Doppellaschen 14 und der Bolzen 13 mit dem Balken 8 bewegbar verbunden sowie mittels der Steuerstangen 18 bzw. Zugstangen 19 an den Kurbelzapfen 22.1, 22.2, 22.3, 22.4 bewegbar angebracht, wobei die Kreuzgelenkkolben 16 der Steuergestänge 11 bzw. der Zuggestänge 12 wegen der Bewegungsvorgänge des Balken 8 sowie der Kurbelzapfen 22.1, 22.2, 22.3, 22.4 und der dadurch auftretenden Seitenkräfte in den Zylindern 20 bzw. 21 geführt werden und eine Gelenkfunktion an den Anordnungsstellen der Bolzen 15, 17 existent ist.
An den Steuergestängen 11, mit deren Hilfe kurz vor dem unteren Totpunkt die Arbeitstakte ausgelöst werden, ist das Maß L, entsprechend der Aufgabenstellung, auf eine hierfür erforderliche Länge gebracht, wobei die Steuerstangen 18 mit je einem Langloch versehen sind, um die Drehbewegung der Kurbelwelle 22, unabhängig an welcher Stelle sich die Kurbelzapfen 22.3, 22.4 auf ihren Umlaufbahnen befinden, sicherzustellen, jedoch mit der Einschränkung auf den Bereich, der zwischen kurz vor dem unteren Totpunkt und im unteren Totpunkt selbst liegt, und in welchem der jeweilige Arbeitstakt ausgelöst wird. Die Zugstangen 19 der Zuggestänge 12, mit dessen Hilfe die auf der Streckenlänge der Hubwege s_{H} wirkenden Kräfte sowie Hubgeschwindigkeiten in die Kurbelzapfen 22.1, 22.2 eingeleitet bzw. übertragen werden, sind ebenfalls mit je einem Langloch versehen, um die Drehbewegung der Kurbelwelle 22, unabhängig an welcher Stelle sich die Kurbelzapfen 22.1, 22.2 auf ihren Umlaufbahnen befinden, sicherzustellen.

Die Kraftmaschine besitzt aufgrund des Maschinengestells 24, dessen Ständer 25 die Form eines Sechskants haben, und der damit verbundenen Anordnung der KEE I bis VI, nur eine Kurbelwelle 22, welche mit dem Schwungrad 28 drehfest verbunden und in den Ständern 25 mittels der Lager 23 drehbar angebracht ist. Die Kurbelwelle 22 besitzt zwei Kurbelzapfen 22.3, 22.4 zur Auslösung der Arbeitstakte und zwei Kurbelzapfen 22.1, 22.2, in die Kräfte eingeleitet und die Hubgeschwindigkeiten übertragen werden. Alle Kurbelzapfen befinden sich in einem zur Kurbelwellenseitenansicht und in dessen Achsenschnittpunkt angelegten Koordinatensystem auf der y-Achse, wobei die Kurbelzapfen 22.1, 22.4 im Bereich minus y und die Kurbelzapfen 22.2, 22.3 im Bereich plus y angeordnet sind.
Jede Kurbelzapfenlänge ist so bemessen, daß jeweils sechs Steuergestänge 11 am Kurbelzapfen 22.3, bzw. 22.4 sowie jeweils sechs Zuggestänge 12 am Kurbelzapfen 22.1, bzw. 22.2 nebeneinander aufgenommen werden können, wobei diese "Nebeneinanderanordnung" die zuvor beschriebene Anordnung der Bohrungen im Balken 8 für die Gestänge 11, 12 und der damit verbundenen unterschiedlichen Längen der Hubwege s_{H} erklärt.

Bei den Kraft-Erzeuger-Einheiten I bis VI werden die Balken 8 über die Ankerplatten 5, 6 von den Elektromagneten 1, 2 im Wechsel angezogen, so daß die Balken 8 ständigen Hin- und Herbewegungen unterzogen sind, wobei als Folge der Bewegungen der Bewegungsbereichwinkel α in Abhängigkeit von der Länge der Luftwege *s*_{L} indirekt fixiert ist. Die im Bewegungsbereichwinkel α liegenden Hubwege s_{H} , sind durch die Anordnung der Abstände, die zwischen der senkrechten Achse 0 sowie den senkrechten Achsen Y,Y' liegen, vorbestimmt und auf die für eine Kurbelwellenumdrehung benötigten Längen festgelegt.
Aus den Hin- und Herbewegungen des Balken 8 resultieren auf den vorbestimmten Streckenlängen der Luftwege s_{L} primäre Hubbewegungen, sowie auf den vorbestimmten Streckenlängen der Hubwege s_{H} sekundäre Hubbewegungen, wobei die Wandlung elektrischer Energie in magnetische/mechanische Energie innerhalb der primären Hubbewegungen und in zwei Arbeitstakten mit besonderer Arbeitstechnik erfolgt.
Beim Arbeitstakt 1 haftet die Ankerplatte 6 aufgrund der Remanenz an den Polen des ausgeschalteten Elektromagnetes 2, und die Ankerplatte 5 wird zum gleichen Zeitpunkt von den Polen des eingeschalteten Elektromagnetes 1, bis diese ihre Endlage erreicht, angezogen, und beim Arbeitstakt 2 haftet die Ankerplatte 5 aufgrund der Remanenz an den Polen des ausgeschalteten Elektromagnetes 1, und die Ankerplatte 6 wird zum gleichen Zeitpunkt von den Polen des eingeschalteten Elektromagnetes 2, bis diese ihre Endlage erreicht, angezogen, wodurch die jeweilige Magnetanzugskraft zunächst von Null bis auf einen Zwischenwert F_{zw} ansteigt, kurz vor dem unteren Totpunkt des Kurbelzapfens 22.4, bei welchem der Arbeitstakt 1, bzw. kurz vor dem unteren Totpunkt des Kurbelzapfen 22.3, bei welchem der Arbeitstakt 2 in der mit Pfeil 29 angegebenen Drehrichtung plötzlich ausgelöst wird, sprungartig vom Zwischenwert F_{zw} auf den Höchstwert Fₘₐₓ hochschnellt.
Die während der Arbeitstakte gewonnene Eigenschaft der sprungartigen Wirkung wird über den Balken 8 auf die sekundären Hubbewegungen übertragen und über die Zuggestänge 12 in die Kurbelwelle 22 eingeleitet.

Bei der mit sechs Kraft-Erzeuger-Einheiten ausgestatteten Kraftmaschine ist jede KEE mit nur einem Arbeitstakt pro Kurbelwellenumdrehung beteiligt.
Die Arbeitstakte werden mittels des Balken 8 über die Steuergestänge 11 im Zusammenwirken mit den Kurbelzapfen 22.3 bzw. 22.4 sowie durch die zu diesem Zeitpunkt wirkende jeweilige Magnetanzugskraft, kurz vor dem jeweiligen unteren Totpunkt der erwähnten Kurbelzapfen, ausgelöst.
Die Arbeitstakte finden im Wechsel statt, wobei die sekundäre Hubbewegung, die auf der senkrechten Achse Y stattfindet, mit dem Arbeitstakt 1, und die sekundären Hubbewegung, die auf der senkrechten Achse Y' stattfindet, mit dem Arbeitstakt 2 zeitgleich ablaufen.
In der Prinzipskizze gemäß Fig.5 ist der Kurbelzapfen 22.1 auf seiner Umlaufbahn während des Arbeitstaktes 1 der KEE I, die Auswirkung des Hubweges s_{H'} auf den Bewegungswinkel dieses Kurbelzapfens mit Bezug auf die Winkelteilung am Maschinengestell und der daraus resultierende Anteil an einer Kurbelwellenumdrehung als Beispiel dargestellt.
Anhand dieses Beispiels und der in Tabelle 1 gemachten Angaben ist der grundsätzliche Umdrehungsablauf der Kraftmaschine festgelegt, was indessen keiner weiteren Erläuterung bedarf, weil derartige Zusammenhänge dem Fachmanne geläufig sind.

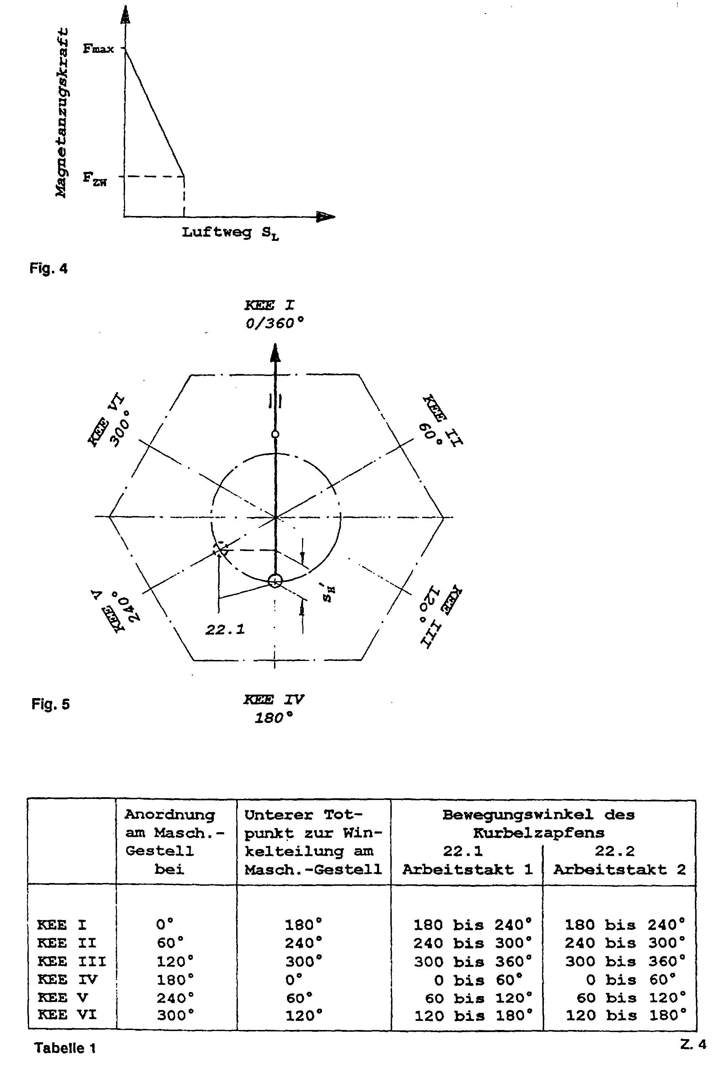

Wie dem Kraft-Luftweg-Diagramm nach Fig.4 zu entnehmen ist, wirkt die während der Arbeitstakte erzeugte Magnetanzugskraft in Praxi wie eine "Magnetfeder", deren Besonderheit ist, daß diese, wenn sie plötzlich ausgelöst wird, vom Zwischenwert F_{zw} sprungartig und unter ständigem Kraftzugewinn auf den Höchstwert Fₘₐₓ hochschnellt, wobei die Zeit, in der sich die Magnetanzugskraft von Null auf den Zwischenwert F_{zw} "aufbauen" kann, daraus resultiert, daß alle Arbeitstakte 1 der sechs KEE hintereinander und danach alle Arbeitstakte 2 der sechs KEE auch hintereinander und unter Beibehaltung dieser Intervalle ablaufen. Diese "Aufbauzeit" ist gleich der Zeit, in der eine Kurbelwellenumdrehung stattfindet.

Die elektromechanische Kraftmaschine wird mit Wechselstrom versorgt, an welchem ein "Variable V Transformer" angeschlossen ist.
Am Ausgang dieses Transformators sind sechs Gleichrichter angeschlossen, über welche die Elektromagnete 1, 2 jeder KEE einzeln mit Gleichstrom gespeist werden.
Die Schaltung wird am Wechselstrom vorgenommen, der in den Verbindungsleitungen Ausgang Transformator / Eingang Gleichrichter fließt, wobei die Schaltungen vom sich ständig hin- und herbewegenden Balken 8 oder in einer anderen geeigneten Weise ausgelöst werden.
Die Elektromagnete 1, 2 jeder KEE werden im Wechsel geschaltet, d.h., daß zur gleichen Zeit, in der Magnet 1 eingeschaltet wird, wird Magnet 2 ausgeschaltet und umgekehrt, wobei alle Elektromagnete 1 der sechs KEE hintereinander sowie alle Elektromagnete 2 der sechs KEE hintereinander und unter Beibehaltung dieser Intervalle geschaltet werden.

Die Magnetspulen 3 werden mittels Dioden kurzgeschlossen, um die beim Ausschaltvorgang in den Spulen entstehende Selbstinduktion unschädlich zu machen.

Die Steuerung der elektromechanischen Kraftmaschine erfolgt durch den oben erwähnten "Variable V Transformer", mittels welchem über die Stromspannung die Größe der Magnetanzugskräfte, die Anzahl der Arbeitstakte pro Zeiteinheit und damit letztendlich die Anzahl der Kurbelwellenumdrehungen pro Zeiteinheit bestimmt werden, wobei die Luftwege s_{L} von konstanter Größe und zusammen mit den anderen erläuterten Parametern, auf die vorgegebene Soll-Nennleistung der Kraftmaschine vorbestimmt sind.

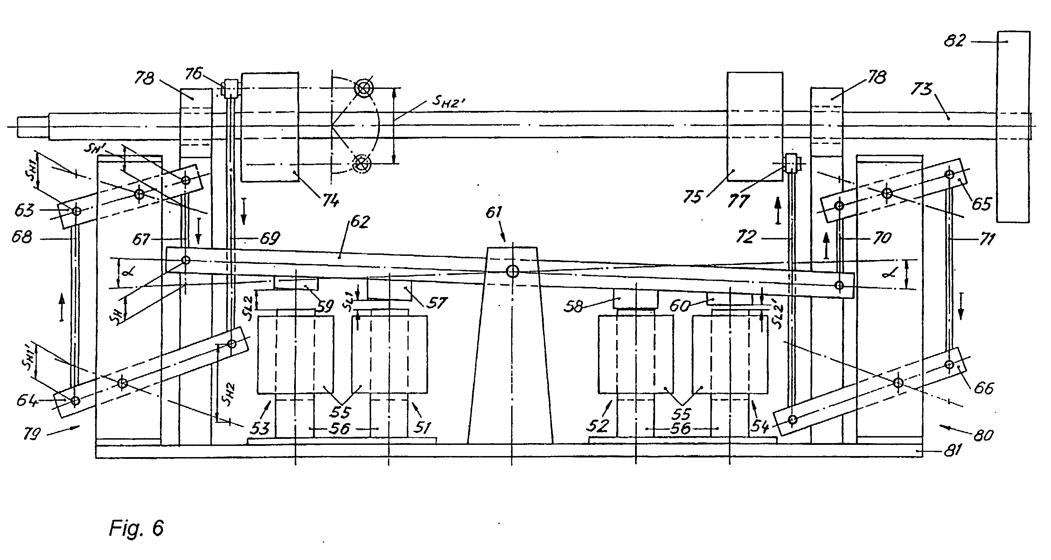

Die Elektromechanische-Kraftmaschine nach Fig. 6 ist das zweite Ausführungsbeispiel, das zum ersten Beispiel nach Fig. 1 bis 3, folgende unterschiedlichen Merkmale hat:
- die Kraftmaschine besitzt nur eine Kraft-Erzeuger-Einheit, die jedoch in modifizierter Ausführung
- die Kraft-Erzeuger-Einheit ist mit einer Mittel-Wippe ausgerüstet, die insbesondere zur Modifizierung der Magnetanzugskräfte benutzt wird
- die Kraft-Erzeuger-Einheit besitzt Etage-Wippen, mittels welchen Soll-Hubwege vorbestimmt werden können
- die Mittel-Wippe und die Etage-Wippen werden zur Optimierung der Hubgeschwindigkeiten sowie zur Übertragung von mechanischen Größen angewendet
- die mechanischen Größen werden in Freilauf-Kupplungen und über diese in eine Antriebswelle eingeleitet, wobei diese Freilauf-Kupplungen der Patentschrift DE 43 23 955 C2 entsprechen.

In Fig. 6 ist die Elektromechanische-Kraftmaschine als Vorderansicht und der Veranschaulichung im Moment der Auslösung des Arbeitstaktes 1 dargestellt.

Obwohl zeichnerisch nicht dargestellt, wurden im Text dieser Beschreibung die beim Arbeitstakt 1 für die Luft- und Hubwege verwendeten Bezugszeichen (s_{L1}, s_{L2}, s_{L2'} , s_{H}, s_{H'} , s_{H1}, s_{H1'} , s_{H2}, s_{H2'}), analog auch beim Arbeitstakt 2 angewendet.

Die Elektromagnete 51, 52, 53, 54, die Mittel-Wippe 61, die Etage-Wippen 79, 80 sowie die Ständer 78, sind auf der Maschinenplatte 81 angeordnet und auf dieser befestigt.
Die Elektromagnete 51, 52, 53, 54 sind durch die Bauart der Eisenkerne 56 in Hufeisenform mit Vierkantprofil und damit durch die zwei Magnetpole sowie den vierkantigen Polflächen, mit einer für diese Bauart größt erreichbaren Gesamtanzugsfläche versehen. Die Eisenkerne 56 und die Ankerplatten 57, 58, 59, 60 bestehen aus einem weichmagnetischen Werkstoff, den eine hohe magnetische Flußdichte bei stromdurchflossener Spule und eine verbleibende Flußdichte bei stromloser Spule (Remanenz) kennzeichnet, und die Remanenz bei den Magneten 51, 52 bzw. Ankerplatten 57, 58 so vorbestimmt ist, daß diese bei der Modifizierung der Magnetanzugskräfte von ausreichender Größe ist.
Die Elektromagnete 51, 52, 53, 54 sind mit Spulen 55 versehen, die eine so große Anzahl an Windungen aufweisen, daß einerseits die antreibende Größe im magnetischen Kreise die Durchflutung, Θ = I · N, also das Produkt aus Stromstärke (I) mal der Anzahl der Spulenwindungen (N), primär aus der Anzahl der Spulenwindungen gewonnen wird, und daß andererseits der aus der Anzahl der Spulenwindungen resultierende Drahtwiderstand, zur Minimierung der Stromaufnahme und damit zur Aufnahmebegrenzung der elektrischen Leistung angewendet wird, wobei die Spulen 55 an eine elektrische Gleichspannung angeschlossen sind, bei welcher die Stromaufnahme nur vom Drahtwiderstand nicht aber von der Induktivität der Spulen oder der Größe der Luftwege s_{L1} bzw. s_{L2} abhängig ist.

Die Mittel-Wippe 61 besteht aus einem Ständer und dem Balken 62, welcher mittels einer Welle im Ständer drehbar gelagert ist, wobei durch die Längenbestimmung der Hebelarme zu ihrem Drehpunkt an diesem Balken, die Hubwege *s*_{H} auf die erforderlichen Soll-Längen gebracht werden.

Die an den Balken 62 befestigten Ankerplatten 57, 58, 59, 60 und die Elektromagnete 51, 52, 53, 54 sind zur Balkenlängsachse quer angeordnet.
Die Form der Ankerplatten 57, 58 ist geometrisch so gestaltet, daß im angezogenen Zustand dieser Platten, ein sattes Anliegen an die Magnetpole erreicht wird.

Die geometrische Form der Ankerplatten 59, 60 ist dagegen unter Berücksichtigung der Luftwege s_{L2} bzw. s_{L2}, gestaltet, wobei diese Luftwege so vorbestimmt sind, daß sie eine geringst mögliche Länge aufweisen. Der jeweilige Luftweg s_{L2'} ist jedoch so groß, daß die Ankerplatten an den Magnetpolen nicht haften.

Die Etage-Wippen 79, 80 bestehen aus je einem Ständer und den Balken 63, 64 bzw. 65, 66, welche mittels Wellen in den Ständern drehbar gelagert sind, wobei durch die Längenbestimmung der Hebelarme zu ihren Drehpunkten an diesen Balken, die Hubwege s_{H1} sowie s_{H2} auf die erforderlichen Soll-Längen gebracht werden.

Mittels der Gestänge 67, 68 bzw. 70, 71 ist der Balken 62 mit den Balken 63, 64 bzw. 65, 66 untereinander beweglich verbunden. Das Gestänge 69 verbindet beweglich den Balken 64 mit dem Bolzen 76 der Freilauf-Kupplung 74 und das Gestänge 72 verbindet beweglich den Balken 66 mit dem Bolzen 77 der Freilauf-Kupplung 75.

Auf der Antriebswelle 73 sind die Freilauf-Kupplungen 74, 75 installiert und das Schwungrad 82 drehfest mit dieser verbunden, wobei die Antriebswelle 73 in den zwei Ständern 78 drehbar gelagert ist.

Mit der Anordnung der Wippen und damit des Balkens 62 zu den Balken 63, 64 bzw. 65, 66 in Etagen wird bezweckt, daß die während der Einleitung der Kräfte in die Freilauf-Kupplung 74 bzw. 75 jeweils betroffenen Gestänge 67, 68, 69 bzw. 70, 71, 72 unter Zugbeanspruchung, und die während der Kupplungsrückstellung jeweils betroffenen Gestänge 70, 71, 72 bzw. 67, 68, 69 unter Druckbeanspruchung stehen, wobei die Einleitung der Kräfte in eine dieser Kupplungen mit der Rückstellung einer anderen dieser Kupplungen im gleichen Zeitpunkt abläuft, und was für Arbeitstakt 1, aus den neben den Gestängen plazierten Pfeilen in Fig. 6, zu ersehen ist.

Bei der Elektromechanischen-Kraftmaschine wird der Balken 62 über die Ankerplatten 57, 58, 59, 60 von den Elektromagneten 51, 52, 53, 54 im Wechsel angezogen, so daß der Balken 62 ständigen Hin- und Herbewegungen unterzogen wird, wobei als Folge der Bewegungen der Bewegungsbereichwinkel α in Abhängigkeit von der Länge der Luftwege s_{L1} indirekt fixiert ist.
Die im Bewegungsbereichwinkel α liegenden Hubwege s_{H} sind durch die Länge der Hebelarme, die vom Drehpunkt des Balken 62 ausgehen, vorbestimmt.

Aus den Hin- und Herbewegungen des Balken 62 resultieren auf den vorbestimmten Streckenlängen der Luftwege s_{L1} primäre Hubbewegungen, sowie auf den vorbestimmten Streckenlängen der Hubwege s_{H} sekundäre Hubbewegungen. Jede primäre Hubbewegung ist mit einem Arbeitstakt verbunden, bei welchem die dem jeweiligen Arbeitstakt zuzuordnenden Magnetanzugskräfte modifiziert werden, und während welchem durch die gleichzeitig stattfindende sekundäre Hubbewegung, die Hubgeschwindigkeit auf der Streckenlänge des diesem jeweiligen Arbeitstakt zuzuordnenden Hubweges s_{H} optimiert wird.
Beim Arbeitstakt 1 haftet die Ankerplatte 58 aufgrund der Remanenz an den Polen des ausgeschalteten Elektromagnetes 52 und die Ankerplatte 57 sowie 59 wird im gleichen Zeitpunkt von den Polen des eingeschalteten Elektromagnetes 51 sowie 53 bis diese ihre Endlage erreichen angezogen, wobei während diesem Vorgang die Freilauf-Kupplung 75 durch den Mechanismus der Wippen und den dazugehörigen Gestängen in die Ausgangsposition von Arbeitstakt 2 gebracht wird.
Beim Arbeitstakt 2 haftet die Ankerplatte 57 aufgrund der Remanenz an den Polen des ausgeschalteten Elektromagnetes 51 und die Ankerplatte 58 sowie 60 wird zum gleichen Zeitpunkt von den Polen des eingeschalteten Elektromagnetes 52 sowie 54 bis diese ihre Endlage erreichen angezogen, wobei während diesem Vorgang die Freilauf-Kupplung 74 durch den Mechanismus der Wippen und den dazugehörigen Gestängen in die Ausgangsposition von Arbeitstakt 1 gebracht wird.
Beim Arbeitstakt 1 bzw. 2 steigen die Magnetanzugskräfte zunächst von Null bis auf einen Zwischenwert F_{zw} und im Moment, in dem sie plötzlich ausgelöst werden bzw. wurden, schnellen diese sprungartig vom Zwischenwert F_{zw} auf den Höchstwert F_{mzx} hoch, und wodurch die Hubanfangsgeschwindigkeit in der Hauptsache gesteigert wird. Wie dem Kraft-Luftweg-Diagramm nach Fig. 4 zu entnehmen ist, wirkt die während der Arbeitstakte modifizierte Magnetanzugskraft in Praxi wie eine "Magnetfeder", dessen Besonderheit ist, daß wenn diese plötzlich ausgelöst wird, vom Zwischenwert F_{zw} sprungartig und unter ständigem Kraftzugewinn, der durch den geringer werdenden Luftweg s_{L1} aber auch s_{L2} verursacht wird, auf den Höchstwert Fₘₐₓ hochschnellt, wobei die Zeit in der sich die Magnetanzugskraft von Null auf den Zwischenwert F_{zw} "aufbauen" kann, vorbestimmt ist.

Bedingt durch die Konzeption der Mittel- und Etage-Wippen nehmen die modifizierten Magnetanzugskräfte, die im Endeffekt als wirkende Kräfte in die Freilauf-Kupplungen eingeleitet werden gemäß dem Hebelgesetz ab, doch die während der Arbeitstakte erhaltene sprungartige Wirkung und höhere Hubanfangsgeschwindigkeit, bleiben den wirkenden Kräften erhalten.

Mittels der Freilauf-Kupplungen 74, 75 werden die wirkenden Kräfte über Hebelarme, und ohne Inanspruchnahme von Steuergeräten, als Drehmomente in die Antriebswelle 73 eingeleitet, wobei die Hebelarme vom Mittelpunkt der Antriebswelle 73 bis zu dem jeweiligen Mittelpunkt der Bolzen 76 bzw. 77 existent sind.

Die Optimierung der Hubgeschwindigkeit wird dadurch erreicht, daß für die größeren Streckenlängen der Hubwege s_{H} die gleiche Zeit wie für die kleineren Streckenlängen der Luftwege s_{L1} benötigt wird, d.h. daß auch die Hubwege s_{H1} sowie s_{H2} ebenfalls in dieser Zeit absolviert werden.
Bei der Vorbestimmung der End-Hubgeschwindigkeit, die über den Mechanismus der Wippen und den dazugehörigen Gestängen in die Freilauf-Kupplungen übertragen wird, ist daher die Streckenlänge s_{H2'} maßgebend, wobei die Hubwege untereinander in der Beziehung s_{H} = s_{H'} , s_{H1} > s_{H'} , s_{H1} = s_{H1'} , s_{H2} > s_{H1'} und s_{H2} = s_{H2'} stehen.

Die Anzahl der Arbeitstakte pro Zeiteinheit wird durch die Größe der Magnetanzugskräfte der Elektromagnete 53, 54 bestimmt, bei dessen Größenbemessung die Einflüsse der Luftwege s_{L2}, die Größe der Magnetanzugskräfte der Elektromagnete 51, 52, die Wirkung der Haftkräfte bei diesen Magneten, und die erforderliche Zeit in der die Magnetanzugskräfte von Null auf den Zwischenwert F_{zw} steigen, berücksichtigt und aufeinander abgestimmt sind, wobei die Magnetanzugskräfte der Elektromagnete 51 bzw. 52 sowie die Luftwege s_{L1} von konstanter Größe sind und zuvor ebenfalls vorbestimmt wurden.

Die Elektromechanische-Kraftmaschine wird mit Wechselstrom versorgt, an welchem mindestens zwei "Variable V Transformer" angeschlossen sind. Am Ausgang dieser Transformatoren sind Gleichrichter angeschlossen, über welche die Elektromagnete 51, 52, 53, 54 einzeln mit Gleichstrom gespeist werden.

Die Schaltung wird am Wechselstrom vorgenommen, der in den Verbindungsleitungen Ausgang Transformator / Eingang Gleichrichter fließt, wobei die Schaltungen vom sich ständig hin und herbewegenden Balken 62 oder in einer anderen geeigneten Weise, ausgelöst werden, d.h. die Elektromagnete 51, 53 bzw. 52, 54 werden grundsätzlich im Wechsel geschaltet.

Die Magnetspulen 55 werden mittels Dioden kurzgeschlossen, um die beim Ausschaltvorgang in den Spulen entstehende Selbstinduktion unschädlich zu machen.

Bei der Elektromechanischen-Kraftmaschine wird über die oben erwähnten "Variable V Transformer" mittels der Stromspannung, die Größe der Magnetanzugskräfte der Elektromagnete 53 bzw. 54 und damit die Anzahl der Arbeitstakte pro Zeiteinheit bzw. indirekt auch die Wellenumdrehungen pro Zeiteinheit bestimmt, wobei alle erläuterten Parameter einschließlich die des Schwungrades 82, auf die vorgegebene Soll-Nennleistung der Kraftmaschine vorbestimmt sind.

Bei einem weiteren Ausführungsbeispiel nach Fig. 1, werden die KEE I bis VI zusätzlich mit den Elektromagneten 53, 54 sowie mit den Ankerplatten 59, 60 ausgerüstet und die Balken 8 entsprechend verlängert. In so einem Fall werden die erwähnten Elektromagnete und Ankerplatten zwischen den senkrechten Achsen X,Y bzw. X',Y' angeordnet, wobei diese Magnete die gleiche Aufgabe haben wie bei der Kraftmaschine gemäß der Fig. 6, und die im zweiten Ausführungsbeispiel beschrieben ist.

## Patentansprüche

1. Elektromechanische Kraftmaschine, umfassend
- zwei mit Spulen (3) und einem U-förmigen, weichmagnetischen Eisenkern (4) versehene Elektromagnete (1, 2), die wechselweise ein- und ausgeschaltet werden,
- eine Wippe (7) mit Drehpunkt (10) und beiderseits des Drehpunkts (10) in einem ersten Abstand angebrachten weichmagnetischen Ankerplatten (5, 6), die von den bestromten Elektromagneten (1, 2) angezogen werden,
- eine Kurbelwelle (22), die mit der Wippe (7) über ein Zuggestänge (12) verbunden ist und mit der die Bewegung der Wippe (7) in eine Drehbewegung umgesetzt wird,
dadurch gekennzeichnet, daß
- die Elektromagnete (1, 2) sowie die Wippe (7) mit den Ankerplatten (5, 6) eine Kraft-Erzeuger-Einheit (KEE) darstellen und die mit der Kraft-Erzeuger-Einheit (KEE) durchzuführende Umwandlung elektrischer Energie in mechanische Energie durch zwei wechselseitig auftretende Arbeitstakte erfolgt, wobei beim ersten Arbeitstakt die Ankerplatte (6) aufgrund der Remanenz an den Polen des ausgeschalteten Elektromagnetes (2) haftet und die Ankerplatte (5) zum gleichen Zeitpunkt von den Polen des eingeschalteten Elektromagnetes (1) -bis diese ihre Endlage erreicht- angezogen wird und beim zweiten Arbeitstakt die Ankerplatte (5) aufgrund der Remanenz an den Polen des ausgeschalteten Elektromagnetes (1) haftet und die Ankerplatte (6) zum gleichen Zeitpunkt von den Polen des eingeschalteten Elektromagnetes (2) -bis diese ihre Endlage erreicht-angezogen wird, wodurch die jeweilige Magnetanzugskraft zunächst von Null bis auf einen Zwischenwert (F_{zw}) ansteigt, kurz vor dem unteren Totpunkt des zweiten Kurbelzapfens (22.4, 22.3), bei welchem der Arbeitstakt 1 oder 2 ausgelöst wird, sprungartig vom Zwischenwert (F_{zw}) und unter ständigem Kraftzugewinn auf einen Höchstwert (Fₘₐₓ) hochschnellt,
- die Kurbelwelle (22) zwei erste Kurbelzapfen (22.1, 22.2) zur Einleitung der Kräfte bzw. zur Aufnahme der Hubgeschwindigkeiten und zwei zweite Kurbelzapfen (22.3, 22.4) zur Auslösung der Arbeitstakte aufweist,
- je Elektromagnet (1, 2) ein Zuggestänge (12) vorgesehen ist, das in einem zweiten, gegenüber dem ersten Abstand größerem Abstand an der Wippe (7) beweglich befestigt ist und über ein Langloch mit dem zugeordneten ersten Kurbelzapfen (22.1, 22.2) ebenfalls beweglich verbunden ist, wobei das Langloch in Zugstangen (19) der Zuggestänge (12) so ausgestaltet ist, daß einerseits die auf der Streckenlänge der Hubwege (*s*_{H}) vorbestimmten Kräfte sowie Hubgeschwindigkeiten in die zugeordneten ersten Kurbelzapfen (22.1, 22.2) eingeleitet und übertragen werden und andererseits die Drehbewegung der Kurbelwelle (22) unabhängig, an welcher Stelle sich der zugeordnete erste Kurbelzapfen (22.1, 22.2) auf seiner Umlaufbahn befindet, nicht behindert wird,
- je Elektromagnet (1, 2) ein Steuergestänge (11), das in einem dritten, gegenüber dem zweiten Abstand größeren Abstand an der Wippe (7) beweglich befestigt ist und über ein Langloch mit dem zugeordneten zweiten Kurbelzapfen (22.3, 22.4) ebenfalls beweglich verbunden ist, wobei das Langloch in Steuerstangen (18) der Steuergestänge (11) so ausgestaltet ist, daß die Drehbewegung der Kurbelwelle (22) unabhängig, an welcher Stelle sich der zugeordnete zweite Kurbelzapfen (22.3, 22.4) auf seiner Umlaufbahn befindet, nicht behindert wird, jedoch mit der Einschränkung auf den Bereich, der zwischen kurz vor dem unteren Totpunkt und im unterem Totpunkt selbst liegt, in welchem ein Arbeitstakt ausgelöst wird.

2. Elektromechanische-Kraftmaschine nach Patentanspruch 1,
dadurch gekennzeichnet,
daß alle Kurbelzapfen der Kurbelwelle (22) im Totpunkt in einem zur Kurbelwellenseitenansicht und in dessen Achsenschnittpunkt angelegten Koordinatensystem auf der y-Achse liegen, wobei die dem ersten Elektromagnet (1) von der Funktion her zugeordneten Kurbelzapfen (22.1, 22.4) im Bereich minus y und die dem zweiten Elektromagnet (2) von der Funktion her zugeordneten Kurbelzapfen (22.2, 22.3) im Bereich plus y angeordnet sind.

## Claims

1. Electromechanical power machine, comprising
- two electromagnets (1, 2) which can be switched on and off alternately and are fitted with coils (3) and a U-shaped, magnetically soft iron core (4),
- a rocker arm (7) with a pivot (10) which can be pulled up by magnetically soft armature plates (5, 6) to either side of the pivot point (10) from an initial distance, these being pulled up by the energized electromagnets (1, 2),
- a crankshaft (22) connected with the rocker arm (7) via a pull linkage (12) and with which the motion of the rocker arm (7) is converted into a rotary motion,
characterized by
- the electromagnets (1, 2) and the rocker arm (7) together with the armature plates (5, 6) representing a power generation unit (PGU) and with the conversion of electrical energy into mechanical energy by way of the power generation unit (PGU) taking place by way of two alternating working cycles, wherein during the first working cycle the armature plate (6) dwells at the poles of the de-energized electromagnet (2) due to the remanent magnetization and the armature plate (5) being pulled up at the same moment by the poles of the energized electromagnet (1) until the plate reaches its extreme point and in the second working cycle the anchor plate (5) dwells at the poles of the de-energized electromagnet (1) due to the remanent magnetization and the armature plate being pulled up at the same point in time by the poles of the energized electromagnet (2) until the plate reaches its extreme position, wherein the particular magnetic pulling power first rises from the initial zero value to an intermediate value (Fᵢᵥ) just before the bottom dead center of the second crankshaft journal (22.4, 22.3) at which time working cycle 1 or 2 is triggered, causing the power to jump from the intermediate value (Fᵢᵥ) and, at a continuous gain in power, to a maximum value (Fₘₐₓ).
- the crankshaft (22) exhibiting two primary crank journals (21.1, 22.2) to introduce the forces and/or to accept the stroke velocities and two secondary crank journals (22.3, 22.4) used to initiate the working cycles,
- one pull linkage (12) being provided for each electromagnet (1, 2), attached movably to the rocker arm (7) at a second distance, greater than the first distance, and also being movably joined with the associated primary crank journal (22.1, 22.2) by way of an oblong slot, wherein the oblong slot in the pull rods (19) of the pull linkage (12) is fashioned so that, on the one hand, the predetermined forces and stroke speeds along the length of the stroke path (1ₛ) will be introduced into the associated primary crank journals (22.1, 22.2) and transmitted and, on the other hand, the rotary movement of the crankshaft (22) will not be hindered, regardless of the point at which the associated crank journal (22.1, 22.2) is located along its circular course,
- a control rod (11) for each electromagnet (1, 2), attached movably to the rocker arm (7) at a third distance, greater than the second distance, and which is also movably joined with the associated second crank journal (22.3, 22.4) by way of an oblong slot, wherein the oblong slot in the control rods (18) of the control linkage (11) is fashioned so that the rotational movement of the crankshaft (22) will not be hindered, regardless of the point at which the associated second crank journal (22.3, 22.4) may be along its circular path, except with the limitation to the area located between just before the bottom dead center and at bottom dead center itself, at which a working cycle is triggered.

2. Electromechanical power machine as per Claim 1,
characterized by
all the crank journals of the crankshaft (22), when it is at dead center, lying on the Y axis in a side view of the crankshaft and with the coordinate system centered on its shaft intersection, wherein the crank journals (22.1, 22.4) associated functionally with the first electromagnet (1) lie in the minus Y sector and the crank journals (22.2, 22.3) associated functionally with the second electromagnet (2) of being lie in the plus Y sector.

## Revendications

1. Machine motrice électromécanique comprenant
- deux électro-aimants dotés de bobines (3) et d'un noyau magnétique en fer doux en forme de U qui sont connectés et déconnectés par alternance,
- une bascule (7) avec un point d'appui (10) et des plaques d'induit (5,6) magnétiques douces disposées de part et d'autre du point d'appui à un premier écartement qui sont sollicitées par les électro-aimants (1, 2) alimentés en courant,
- un vilebrequin (22) raccordé à la bascule (7) par une tringlerie de traction (12) et par lequel le mouvement de la bascule (7) est converti en mouvement rotatif, caractérisé par le fait que les électro-aimants (1, 2) ainsi que la bascule (7) avec les plaques d'induit (5, 6) représentent une unité génératrice de force (UGF) et que la conversion d'énergie électrique en énergie mécanique à effectuer par l'unité génératrice de force (UGF) s'opère au moyen de deux temps de travail alternés. Au cours du premier temps de travail, la plaque d'induit (6) adhère aux pôles de l'électro-aimant (2) déconnecté en raison de la rémanence pendant que la plaque d'induit (5) est sollicitée par les pôles de l'électro-aimant (1) connecté ― jusqu'à ce que la position finale soit atteinte. Au cours du second temps de travail, la plaque d'induit (5) adhère aux pôles de l'électro-aimant (1) déconnecté en raison de la rémanence pendant que la plaque d'induit (6) est sollicitée par les pôles de l'électro-aimant (2) connecté-jusqu'à ce que la position finale soit atteinte. Ainsi, la force magnétique respective de l'aimant commence par monter de zéro à une valeur intermédiaire (Fint.) juste avant le point mort bas du deuxième maneton (22.4, 22.3) au niveau duquel le temps de travail 1 ou 2 est déclenché avant de sauter brusquement de la valeur intermédiaire (Fint.) à une valeur maximale (Fₘₐₓ.) avec accumulation permanente de force.
- le vilebrequin (22) présente deux manetons primaires (22.1, 22.2) pour amorçage des forces et/ou absorption des vitesses de course ainsi que deux manetons secondaires (22.3, 22.4) destinés à déclencher les temps de travail,
- une tringlerie de traction (12) est respectivement prévue sur chaque électro-aimant (1, 2) et fixée à la bascule (7) de manière mobile à une distance supérieure à celle du premier écartement. Elle est également fixée de manière mobile au premier maneton (22.1, 22.2) correspondant par l'intermédiaire d'un trou oblong, le trou oblong étant conçu sur les barres de traction (19) de la tringlerie (12) de telle manière que les forces prédéterminées sur la distance des levées (D_{L}) ainsi que les vitesses de levée soient acheminées et transmises aux manetons primaires correspondants (22.1, 22.2), d'une part, et que le mouvement rotatif du vilebrequin (22) ne soit pas entravé quel que soit le point auquel le maneton primaire correspondant (22.1, 22.2) se trouve dans sa trajectoire, d'autre part,
- une tringlerie de commande (11) est respectivement prévue sur chaque électro-aimant (1, 2) et fixée à la bascule (7) à un troisième écartement plus important que le second. Elle est également reliée de manière mobile au second maneton (22.3, 22.4) correspondant par l'intermédiaire d'un trou oblong, le trou oblong étant conçu sur les barres de commande (18) de la tringlerie de commande (11) de telle manière que le mouvement rotatif du vilebrequin (22) ne soit pas entravé quel que soit le point auquel le second maneton correspondant (22.3, 22.4) se trouve dans sa trajectoire en se limitant toutefois à la zone comprise entre celle qui précède juste le point mort bas et celle du point mort bas proprement dit au niveau duquel le temps de travail s'engage.

2. Machine motrice électromécanique selon demande de brevet 1, caractérisée par le fait que tous les manetons du vilebrequin (22) sont situés à leur point mort au sein d'un système de coordonnées déterminé par rapport à la vue latérale du vilebrequin et son point d'intersection des axes et situé sur l'axe y, les manetons (22.1, 22.4) affectés au premier électro-aimant (1) de par leur fonction étant situés dans la zone moins « y » et les manetons (22.2, 22.3) affectés au second électro-aimant (2) de par leur fonction étant situés dans la zone plus « y ».
